# EUROPEAN PATENT SPECIFICATION

(11) **EP 1 677 564 B1**
(45) Date of publication and mention of the grant of the patent: **23.01.2008**
(21) Application number: 05257707.9
(22) Date of filing: 15.12.2005
(51) Int. Cl.: H04Q 7/38

(54) **Load balancing on shared wireless channels**
Lastausgleich auf gemeinsam genutzten drahtlosen Kanälen
Equilibrage de charge sur des canaux sans fil partagés

(30) Priority: 29.12.2004 US 25669
(43) Date of publication of application: 05.07.2006
(73) Proprietor: Lucent Technologies Inc., Murray Hill, New Jersey 07974-0636 (US)
(72) Inventor: Bernhard, Urs Peter, Nuremberg 90411 (DE); Mueckenheim, Jens, Nuremberg 90411 (DE)
(74) Representative: Sarup, David Alexander

(56) References cited:
- EP-A- 1 349 410
- WO-A-02/054819
- WO-A-20/05062659
- WO-A-20/05076946
- US-A1- 2004 072 565

## Description

### BACKGROUND OF THE INVENTION

### 1. FIELD OF THE INVENTION

This invention relates generally to telecommunications, and more particularly, to wireless communications.

### 2. DESCRIPTION OF THE RELATED ART

To efficiently transfer data or information, such as voice, text or video among communication devices over channels in a network, a wide variety of wireless mobile communication systems are being utilized. To this end, a number of standards for network technologies and communication protocols have been proposed or suggested, rendering a host of different services to users. For example, a third generation partnership project (3GPP) standardization has introduced a Universal Mobile Telecommunications System (UMTS) protocol for a radio access network, such as a Universal Mobile Telecommunications System Terrestrial Radio Access Network (UTRAN).

Typically, wireless mobile communication systems include a plurality of cells each of which transmits signals to and receives signals from mobile stations within its coverage or service area. For example, a coverage or service area of a wireless communication network, such as a digital cellular network is generally partitioned into connected service domains known as the cells, where cellular phone users can communicate, via radio frequency (RF) links, with a communication node, e.g., a base station serving the cell. While the cells may be further partitioned into segments, typically three to a cell, the base station may be coupled to a wireline network.

A base station may be assigned a plurality of channels within a frequency spectrum over which it can communicate with a mobile station. A mobile station within range of the base station may communicate with the base station using these channels. In general, the channels used by a base station are separated from one another in some manner so that signals on any channel do not substantially interfere with signals on another channel used by that base station or other adjoining base stations.

Therefore, for mobile communication systems in which areas served by a wireless network are divided into cells, a way is desired for dynamically allocating available system channels to wireless devices, such as mobile stations requiring service. For example, the UMTS standard allows the transmission of data (user or control) in two different channels, namely a dedicated channel (DCH) and a shared channel (SCH) state. Both channels can be characterized by their usage and have a specific behavior, which makes them suitable for carrying different types of traffic.

As one example, in a code division multiple access (CDMA) wireless mobile communication system, a plurality of mobile stations, such as user equipment (UE) may be connected to one or more cells with a best received signal quality on a common pilot channel (CPICH). With this setting, the transmit power and the received interference may be reduced to a minimum level. This approach especially applies to the dedicated channel (DCH), where the UE is in soft handover to more than one cell. Hence, performing load-based handovers (HOs) to other cells on the same frequency may be inefficient because the transmit power and interference increases substantially when no radio link exists for cells with a sufficient quality.

However, for one or more shared wireless communication channels, the situation of load-based handovers to other cells is different due to its nature as a shared resource of a cell. Typically, a shared channel (SCH) belongs to a single cell. A load balancing may be performed between different cells by handing over transmission of data to other cells even at a same frequency.

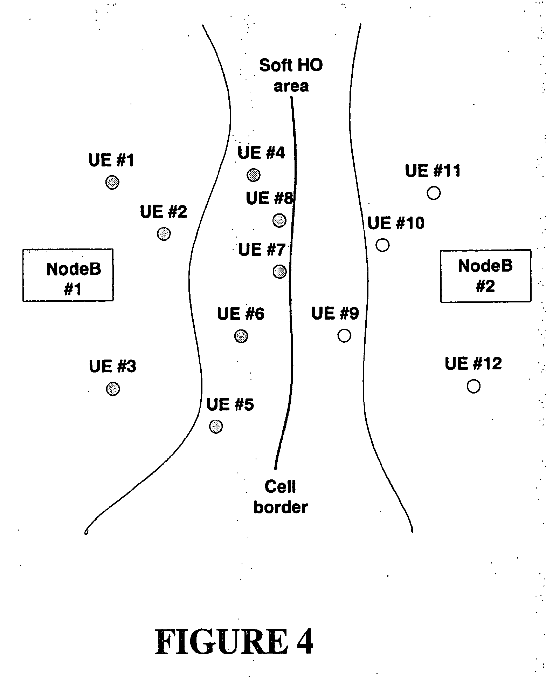

Referring to Figure 4, a typical approach to handling traffic load for a shared channel is shown. In this example, a plurality of UEs are shown connected to two communication nodes, such as base stations, for example a NodeB, *i.e.,* NodeB #1 and NodeB #2, respectively. As shown in the Figure 4, within a certain area between NodeB #1 and NodeB #2, DCH connections may exist to both the NodeB #1 and NodeB #2. This area is also known as a soft handover (HO) region. The soft HO region may be determined by soft HO add and drop margins.

Furthermore, a virtual cell border exists between both the NodeB #1 and NodeB #2. This virtual cell border may be defined by a best received signal quality on the CPICH from each NodeB. In consequence, the soft HO add and drop margins and the virtual cell border may determine the status of the UEs as follows: (i) UE only connected to NodeB #1 (DCH & SCH); (ii) UE only connected to NodeB #2 (DCH & SCH); (iii) UE in soft HO to NodeB #1 and NodeB #2 (DCH), but SCH connected to NodeB #1, only; and (iv) UE in soft HO to NodeB #1 and NodeB #2 (DCH), but SCH connected to NodeB #2, only.

As shown in Figure 4, a typical HO scenario is illustrated when no load balancing is applied. As can be seen, UE #1-3 and UE #10-12 are connected to NodeB #1 and NodeB #2, respectively. For the DCH, UE #4-9 are in soft HO to both NodeB. For the SCH, while UE #4-8 are connected to NodeB #1, UE #9 is connected to NodeB #2. With this configuration, a significant imbalance exists between the SCH in NodeB # 1 and NodeB #2 due to the different numbers of UEs being assigned to each NodeB. From a scheduling perspective, this means that the UE #1-8 of NodeB #1 will receive a relatively poor service due to a reduced throughput than what UE #9-12 will receive from NodeB #2.

Many different methods exist for performing traffic load balancing. For instance, a first method of traffic load balancing is called cell engineering (designing and adaptation). This cell engineering method involves changing the coverage areas of the cells. By modifying specific cell parameters, such as transmit power, antenna down-tilt and/or antenna direction, the coverage areas of specific cells may be changed. However, this method affects the coverage of both channels, *i.e.,* the DCH, as well as, the SCH.

Likewise, a second method of traffic load balancing uses an algorithm for beam-forming to divide a specific cell into several cell portions to distribute the cell load across these cell portions. Again, both the SCH and DCH are affected when performing a load balancing. Because in the two traffic load balancing methods described above, both the SCH and DCH must be balanced together, therefore these load balancing methods do not allow a desired flexibility in balancing traffic load in a transmission of data to a multiplicity of users on one or more shared wireless channels from a communication node associated with a network ofa plurality of cells.

United States Patent Publication No. US 2004/0072565 discloses a best-cell amendment method for amending hysteresis margins according to the degree of congestion. A radio network controlled (RNC) compares the average value P(k) of transmission power of a downlink shared channel PDSCH of cell k and a first threshold value P_threshold1 to measure the degree of congestion. If the RNC determines that the degree of congestion in cell k is high, it sets a small hysteresis margin hm_a, and if RNC determines that the degree of congestion in cell k is low, it sets a large hysteresis margin hm b.

The present invention is directed to overcoming, or at least reducing, the effects of, one or more of the problems set forth above.

### SUMMARY OF THE INVENTION

In one embodiment of the present invention, a method is provided for balancing traffic load between a plurality of users on one or more shared wireless channels associated with a first and a second cell. The method comprises determining a first indication of traffic load for the first cell and a second indication of traffic load for the second cell on the one or more shared wireless channels and redistributing the traffic load on the one or more shared wireless channels associated with the first cell and the second cell based on the first indication of traffic load for the first cell and the second indication of traffic load for the second cell.

In another embodiment, a wireless communication system comprises a network including a plurality of cells and a communication node associated with the network through at least one of said plurality of cells, wherein a mobile station to communicate over the network with the communication node. The wireless communication system further comprises a controller coupled to the communication node to balance traffic load in a transmission of data from the communication node to a multiplicity of users on one or more shared wireless channels. The controller may determine a first indication of traffic load for the first cell and a second indication of traffic load for the second cell on the one or more shared wireless channels and redistribute the traffic load on the one or more shared wireless channels associated with the first cell and the second cell based on the first indication of traffic load for the first cell and the second indication of traffic load for the second cell.

In yet another embodiment, a controller may balance traffic load in a transmission of data from a communication node to a multiplicity of users on one or more shared wireless channels. The controller comprises a processor and a memory coupled to the processor. The memory may store instructions to determine a first indication of traffic load for a first cell of a plurality of cells and a second indication of traffic load for a second cell of the plurality of cells on the shared wireless channels and redistribute the traffic load on the shared wireless channels between the first cell and the second cell based on the first indication of traffic load for the first cell and the second indication of traffic load for the second cell.

In still another embodiment, an article comprising a computer readable storage medium storing instructions that, when executed cause a wireless communication system to determine a first indication of traffic load for a first cell and a second indication of traffic load for a second cell between a plurality of users on one or more shared wireless channels associated with the first and second cells and redistribute the traffic load on the one or more shared wireless channels associated with the first cell and the second cell based on the first indication of traffic load for the first cell and the second indication of traffic load for the second cell to balance the traffic load on the one or more shared wireless channels.

### BRIEF DESCRIPTION OF THE DRAWINGS

The invention may be understood by reference to the following description taken in conjunction with the accompanying drawings, in which like reference numerals identify like elements, and in which:
Figure 1 illustrates a telecommunication system including a controller for a wireless communication network that balances traffic load in a transmission of data to a multiplicity of users on one or more shared wireless channels from a communication node associated with the network of a plurality of cells according to one illustrative embodiment of the present invention;
Figure 2 illustrates a cellular telecommunication system including a radio network controller with a decision algorithm and a base transceiver station with a scheduler defined at least in part by Universal Mobile Telecommunications System standard in accordance with one embodiment of the present invention;
Figure 3 illustrates a stylized representation implementing a method for balancing traffic load in a transmission of data to a multiplicity of users on one or more shared wireless channels from a communication node associated with the network of a plurality of cells shown in Figure 2 consistent with one embodiment of the present invention;
Figure 4 illustrates a stylized representation of a principle of typical load handling for a shared channel with a typical handover scenario when no load balancing is applied;
Figure 5 illustrates a stylized representation of load balancing by moving a cell border in response to providing a decision from the decision algorithm to the first scheduler shown in Figure 2 according to one illustrative embodiment of the present invention;
Figure 6 illustrates a stylized representation of the decision algorithm shown in Figure 2 during a measurement event in accordance with one illustrative embodiment of the present invention;
Figure 7 illustrates a stylized representation of the decision algorithm shown in Figure 2 for a Universal Mobile Telecommunications System Terrestrial Radio Access Network (UTRAN) according to one illustrative embodiment of the present invention;
Figure 8 illustrates application of the decision algorithm shown in Figure 7 to a shared channel handover using the measurement event shown in Figure 6 consistent with an exemplary embodiment of the present invention;
Figure 9 illustrates application of the decision algorithm shown in Figure 7 to a shared channel handover using a fast cell selection strategy on a shared channel according to an embodiment of the present invention; and
Figure 10 illustrates application of the decision algorithm shown in Figure 7 to a cell selection procedure on a forward access channel (FACH) in accordance with one illustrative embodiment of the present invention.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the invention as defined by the appended claims.

### DETAILED DESCRIPTION OF SPECIFIC EMBODIMENTS

Illustrative embodiments of the invention are described below. In the interest of clarity, not all features of an actual implementation are described in this specification. It will of course be appreciated that in the development of any such actual embodiment, numerous implementation-specific decisions must be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

Generally, a method is provided for balancing traffic load in a transmission of data to a multiplicity of users on one or more shared wireless channels from a communication node associated with a network of a plurality of cells. A scheduler, *e*.*g*., at a Node B and a decision algorithm at a controller may be used in a wireless telecommunication system that uses Universal Mobile Telecommunications System (LTMTS) wireless channels including a shared channel (SCH), a forward access channel (FACH), a random access channel (RACH), as well as a dedicated channel (DCH) to switch traffic associated with at least one user of a multiplicity of users on a shared wireless channel from a cell to another cell. The decision algorithm for a Universal Mobile Telecommunications System Terrestrial Radio Access Network (UTRAN) may determine a first indication of traffic load for a first cell of a plurality of cells and a second indication of traffic load for a second cell of the plurality of cells on one or more shared wireless channels and redistribute the traffic load on at least one of the one or more shared wireless channels between the first cell and the second cell based on the first indication of traffic load for the first cell and the second indication of traffic load for the second cell. In this manner, for user equipment (UE), e.g., a UMTS mobile station, the decision algorithm may direct at least a part of the traffic load on a shared channel (SCH) from a source cell to a target cell by moving a cell border without affecting a traffic load on a dedicated channel (DCH).

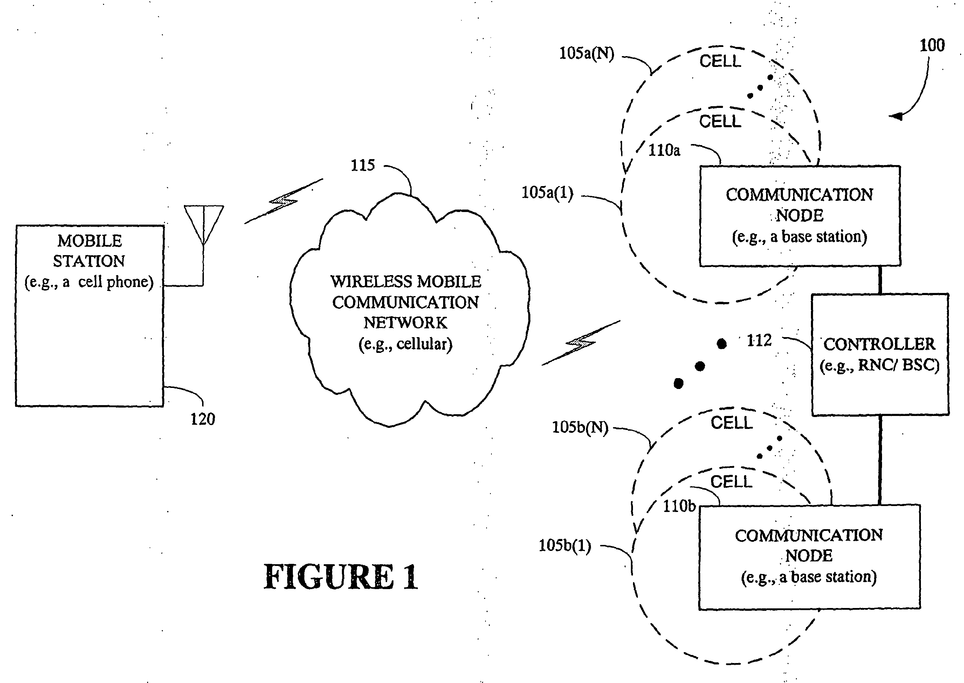

Referring to Figure 1, a telecommunication system 100 includes a plurality of cells 105a (1-N) associated with a first communication node 110a and a plurality of cells 105b (1-N) associated with a second communication node 110b according to one embodiment of the present invention. The service area of the telecommunication system 100 may be partitioned into connected service domains known as cells, where radio device users communicate via radio frequency links over a wireless medium with the communication nodes 110a and 110b, such as a base station (e.g., Node B) serving the cells 105a (1-N) or 105b (1-N). The wireless medium may be capable of handling cellular signals with cellular modems. For example, the wireless medium may operate according to Code Division Multiple Access (CDMA) standard or Global System for Mobile Communications (GSM) standard, which is a land mobile pan-European digital cellular radio communications system.

The communication nodes 110a and 110b may be coupled to a wireline network via a controller 112 which controls a network, such as a wireless mobile communication network 115. The controller 112 balances traffic load in a transmission of data to a multiplicity of users on one or more shared wireless channels from each communication node associated with the network 115 including the plurality of cells 105a (1-N) and 105b (1-N). According to one illustrative embodiment of the present invention, the controller 112 may be a radio network controller (RNC) or a base station controller (BSC) capable of balancing traffic load on one or more shared radio frequency (RF) spectrum channels to the different cells 105a (1-N) and 105b (1-N), such as cells of a digital cellular network. This traffic load balancing may be done for voice, data, or a host of voice and data services in different-generation of wireless networks including digital cellular networks based on standards including Universal Mobile Telecommunications System (UMTS) and 3G-1X (Code Division Multiple Access (CDMA) 2000), as well as IS-95 CDMA, Global System for Mobile Communications (GSM), and Time Division Multiple Access (TDMA).

In one embodiment, each cell 105 may be radiated by an antenna system associated with the communication node 110a or 110b, each include a radio transceiver to serve a mobile station 120 within an associated cell 105 of the plurality of cells 105a (1-N) and 105b (1-N), such as within its cell coverage area. The mobile device 120 may be a wireless device, such as a cell phone that may be used whenever a network coverage is provided. However, the mobile device 120 may be any kind of device capable of communicating with the of cells 105a (1-N) and/or 105b (1-N) in any one of suitable forms of wireless communication for portable cellular and digital phones in addition to hand-held and hands-free phones.

In operation, the controller 112 may direct at least a part of the traffic load on a shared channel of the one or more shared wireless channels from a first cell 105a (1) and a second cell 105a (N) associated with the communication node 110a based on a first indication of traffic load for the first cell 105a (1) of the plurality of cells (1-N) and a second indication of traffic load for the second cell 105a (N) of the plurality of cells (1-N) on the one or more shared wireless channels. That is, the controller 112 may cause traffic associated with at least one user of a multiplicity of users on the one or more shared wireless channels to switch from the first cell 105a (1) to the second cell 105a (N) based on the first indication of traffic load for the first cell 105a (1) and the second indication of traffic load for the second cell 105a (N) determined by the controller 112. To this end, based on the first and second indications of loading, the controller 112 may apply a handover offset (HO_offset) according to the loadings in the first cell 105a (1) and the second cell 105a (N).

The controller 112 may cause traffic associated with at least one user of a multiplicity of users on the shared wireless channels to switch from the first cell 105a (1) to the second cell 105a (N) based on a first indication of traffic load for the first cell 105a (1) and a second indication of traffic load for the second cell 105a (N). To balance traffic load in a transmission of data from the communication node 110a to a multiplicity of users on one or more shared wireless channels, the controller 112 may apply a handover offset (HO_offset) according to the loadings in the first cell 105a (1) and the second cell 105a (N) based on the first indication of traffic load for the first cell 105a (1) and the second indication of traffic load for the second cell 105a (N).

To communicate with the communication node 110, the mobile station 120 may comprise a transceiver including a transmitter and a receiver. In addition, the mobile station 120 may include a processor and a memory storing communication logic. Using the transceiver and the communication logic, the mobile station 120 may establish a wireless communication link with at least one of the communication nodes 110a and 110b in the wireless mobile communication network 115 within a corresponding geographical area, *i.e.*, the cell 105a(N), in one embodiment. For example, the communication nodes 110a and 110b may establish the wireless communication link according to a Universal Mobile Telecommunications System (UMTS) protocol. However, persons of ordinary skill in the relevant art would appreciate that the present invention is not limited to the UMTS protocol. In various alternate embodiments, the wireless communication link may be established according to any one of a desired cellular radio telephone protocol including, but not limited to, a CDMA protocol, a GPRS protocol, a personal communication services (PCS) protocol, and a third generation partnership project (3GPP) protocol.

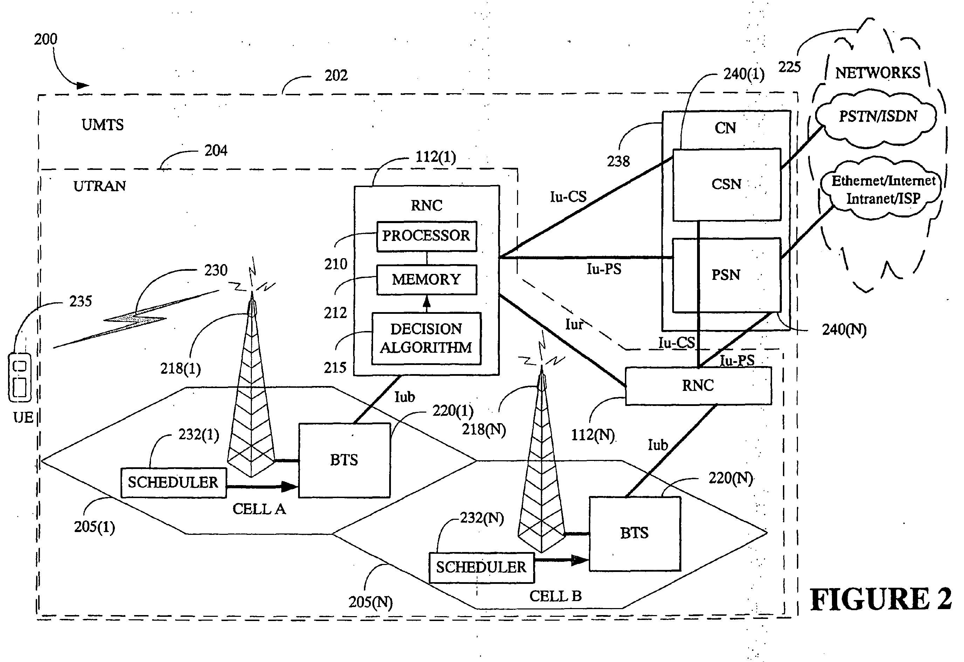

Referring to Figure 2, a cellular telecommunication system 200 includes a first radio network controller (RNC) 112(1) serving a source cell 205(1) and a second radio network controller 112(N) serving a target cell 205(N). The first RNC 112(1) comprises a processor 210 coupled to a memory 212 storing a decision algorithm 215 defined at least in part by the Universal Mobile Telecommunications System standard, in accordance with one embodiment of the present invention.

According to one embodiment, the source cell 205(1) may be radiated by a first antenna system 218(1) associated with a first base transceiver station (BTS) 220(1). The first base transceiver station 220(1) may transmit/receive radio communications over the first antenna system 218(1) to serve user equipment 235, such as a cell phone within the cell 205(1) coverage area. Likewise, the cell 205(N) may include a second antenna system 218(N) associated with a second base transceiver station 220(N), which is in turn coupled to the second RNC 112(N). The user equipment 235 may be configured to communicate with the first and second antenna systems 218(1-N) and with the first and second base transceiver stations 220(1-N) according to a cellular telephone protocol such as the UMTS protocol. For example, the base transceiver station 220(1) may establish a wireless communication link 230 with the user equipment 235 using the first antenna system 218(1) within the source cell 205(1) according to the UMTS protocol.

While the first BTS 220(1) may comprise a first scheduler 232 (1), the second BTS 220(N) may comprise a second scheduler 232 (N), in one embodiment. The first and second schedulers 232 (1-N) may serve the shared channel (SCH). The first scheduler 232 (1) may be connected via a source radio link to the source cell 205(1), located at the source NodeB 1, *i.e.,* the first BTS 220(1). Likewise, the second scheduler 232 (N) may be connected via a target radio link to the target cell 205(N), located at the target NodeB N, *i.e.,* the second BTS 220(N).

The first scheduler 232(1) may provide a level or grade of service for the multiplicity of users on a shared channel (SCH) of the shared wireless channels to derive the traffic load from the level or grade of service. The first scheduler 232(1) may measure a throughput of one or more individual services carried on the shared channel, indicate a high loading on the shared channel in response to a low throughput per service of the individual services, and alternatively, may indicate a low loading on the shared channel in response to a high throughput per service of the individual services.

The first RNC 112(1) may cause triggering of a load measurement on a SCH of each cell of the source and target cells 205(1-N) associated with the first BTS 220(1). Based on the load measurement, the first RNC 112(1) may receive a report of the traffic load on the first scheduler 232(1). The first scheduler 232(1) may control the source and target cells 205(1-N). To this end, the first scheduler 232(1) may use the source cell 205(1) to substantially serve the UE 235, *e.g.,* a mobile station to enable a signaling scheme for selecting the target cell 205(N). The first scheduler 232(1) may receive feedback information from the UE 235 at a single base transceiver station, *i.e*., the first BTS 220(1) to schedule the traffic associated with at least one user on the target cell 205(N).

In operation, a scheduler load may be derived from a level or grade of service the first and second schedulers 232 (1-N) may serve to one or more individual users on the SCH. Before the decision algorithm 215 is started, load measurements on the SCH of each cell may be triggered. These load measurements may report the scheduler load to the decision algorithm 215. In this manner, a load balancing of traffic load on the shared channel, as described in Figure 2, may occur with signaling a new HO_offset for one or more specific cells based on the use of load measurement at the first or second schedulers 232 (1-N).

After a successful reconfiguration, a serving SCH radio link may be moved towards the target cell 205(N) so that the second scheduler 232 (N) of the target cell 205(N) in the target NodeB, *i.e.,* the second BTS 220(N) may now serve the UE 235. Because the first scheduler 232 (1) of the source cell 205(1) in NodeB 1 may not serve the SCH of the UE 235 anymore, the scheduling load of the first scheduler 232 (1) is reduced.

A transmission over a forward access channel (FACH) may be controlled by a scheduler, which is located in the first RNC 112(1). After a successful reconfiguration, the UE 235 may now be served by the FACH scheduler of the target cell 205(N). Because the FACH scheduler of the source cell 205(1) may not serve the UE 235 anymore, the scheduling load of the FACH scheduler is reduced. The source and target FACH schedulers may be located in a same RNC, *i.e.,* the first RNC 112(1), a loss-less transfer of the UE 235 may be accomplished.

In one embodiment, the source cell 205(1) and target cell 205(N) may be controlled by a same scheduler 232 located in a single NodeB. Since a same scheduling entity serves the users in the source cell 205(1) and the target cell 205(N), a scheduler reset may not be desired and, hence, during a fast cell selection (FCS) data loss may be avoided. That is, consistent with one embodiment of the present invention, a portion of the first scheduler 232(1) may be located in the first RNC 112(1) to control the source cell 205(1) and the target cell 205(N). This portion of the first scheduler 232(1) may connect the UE 235 to the source cell 205(1) to receive a message on a forward access channel (FACH) from the source cell 205(1) and send another message on a random access channel (RACH) to the source cell 205(1).

In response to the traffic load in the source cell 205(1) exceeding a threshold, a cell selection offset associated with the source cell 205(1) may be increased while a cell selection offset associated with the target cell may still be maintained. As a result, the portion of the first scheduler 232(1) located in the first RNC 112(1) may control a channel traffic on the FACH between a pair of neighbor cells. For example, the portion of the first scheduler 232(1) located in the first RNC 112(1) may balance the channel traffic on the FACH independently from balancing the traffic load on a dedicated channel (DCH) or a shared channel (SCH) of the shared wireless channels.

The cellular telecommunication system 200 may comprise a Universal Mobile Telecommunications System network 202 including a Universal Mobile Telecommunications System Terrestrial Radio Access Network (UTRAN) 204 for establishing communication between the user equipment 235 and one or more networks 225, such as a Public Switched Telephone Network (PSTN) and an Integrated Services Digital Network (ISDN), Internet, Intranet, and Internet Service Providers (ISPs). The networks 225 may provide multimedia services to the user equipment 235 through the UMTS network 202. However, persons of ordinary skill in the pertinent art should appreciate that the aforementioned types of networks are exemplary in nature and are not intended to limit the scope of the present invention.

Within the UMTS network 202, the base transceiver stations 220(1-N), the first and second radio network controllers (RNCs) 112(1-N) may communicate with a core network (CN) 238 which may be in turn connected to the networks 225 via telephone lines or suitable equipment. Each radio network controller 112 may manage the traffic from the corresponding base transceiver station 220. The first RNC 112(1) is connected with the second RNC 112(N) via the I_{UR} interface. The core network 238 may include a circuit switched network (CSN) 240(1) and a packet switched network (PSN) 240(N). Using the interface IU-CS, the first RNC 112(1) may communicate with the circuit switched network 240(1). Likewise, the second RNC 112(N) may communicate with the packet switched network 240(N) using the IU-PS interface. Similarly, the I_{UB} interface is an interface between the first and second RNCs 112(1-N) and the first and second BTSs 220(1-N), respectively.

To allow the user equipment 235 to transmit and receive cellular communications as the user equipment 235 moves across a wide geographic area, each cell 205 may be physically positioned so that its area of service or coverage is adjacent to and overlaps the areas of coverage of a number of other cells 205. When the user equipment 235 moves from an area covered by the first BTS 220(1) to an area covered by the second BTS 220(N), communications with the user equipment 235 may be transferred (handed off) from one base station to another in an area where the coverage from the adjoining cells 250(1-N) overlaps.

However, the channels allotted to an individual cell 205(1) may be selected so that the adjoining cells 205(2-N) do not transmit or receive on the same channels. This separation is typically accomplished by assigning a group of widely separated non-interfering channels to some central cell and then assigning other groups of widely separated non-interfering channels to the cells surrounding that central cell using a pattern which does not reuse the same channels for the cells surrounding the central cell. This pattern of channel assignments continues similarly with the other cells adjoining the first group of cells.

Accordingly, in one embodiment, the UTRAN 204 may provide a set of transport channels in the physical layer, which may be configured at call setup by the cellular telecommunication system 200. A transport channel is used to transmit one data flow with a given Quality of Service (QoS) over the wireless medium. The UMTS common channels, like a forward access channel (FACH), a random access channel (RACH) and a paging channel (PCH) may be used on a given UMTS physical interface, such as the I_{UB} interface. In this way, the user equipment 235 may communicate with the first base transceiver station 220(1) within the cell 205(1) through an assigned channel pair consisting of an uplink frequency and a downlink frequency

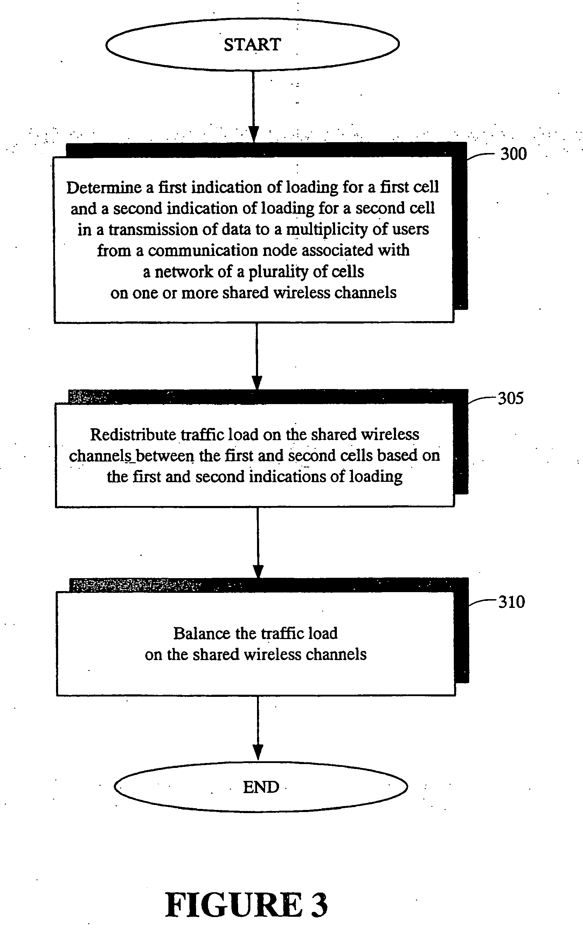

Turning now to Figure 3, a stylized representation implementing a method is depicted for balancing traffic load in a transmission of data to a multiplicity of users on one or more shared wireless channels (SCHs) either from the communication node 110a or 110b associated with the network 115 of the plurality of cells 105a (1-N) and 105b (1-N) shown in Figure 1 or from the first BTS 220(1) associated with the cells 205(1-N) shown in Figure 2 consistent with one embodiment of the present invention. At block 300, the decision algorithm 215 at the first RNC 112(1) in cooperation with the first scheduler 232(1) at the first BTS 220(1) may determine a first and a second indication of traffic load on the (SCHs) for the first cell 105a (1) or the source cell 205(1) and the second cell 105a (N) or the target cell 205(N), respectively.

Based on the first and second indications of loading, the decision algorithm 215 may redistribute the traffic load on the (SCHs) between the first cell 105a (1) or the source cell 205(1) and the second cell 105a (N) or the target cell 205(N), as indicated in block 305. In this way, at block 310, the first RNC 112(1), using the decision algorithm 215 and the first scheduler 232(1) may balance the traffic load in a transmission of data to a multiplicity of users on the (SCHs) from the communication node 110a or 110b, or the first BTS 220(1).

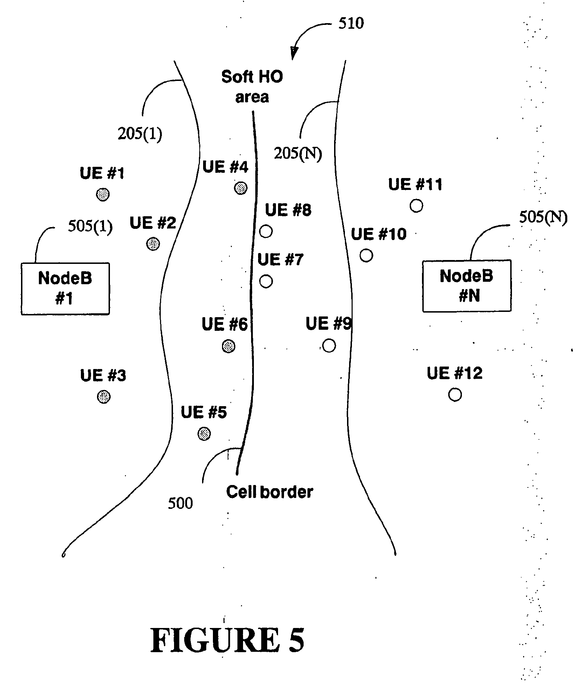

As shown, Figure 5 illustrates a stylized representation of balancing traffic load for the SCH among the user equipments UEs#1-12 by moving a cell border 500 in response to providing a decision from the decision algorithm 215 to the first scheduler 232(1) shown in Figure 2 according to one illustrative embodiment of the present invention. As shown in Figure 5, moving of the cell border 500 towards a NodeB #1, 505(1) cause a NodeB #2, 505(N) to serve the user equipments (UEs, such as the UE 235 shown in Figure 2) #7and 8, providing load balancing on the SCH. The traffic load may be more evenly distributed between both the source and target cells 205(1), 205(N) and, hence, a load balancing may be achieved for the SCH. Of course, when using the CDMA protocol, an appropriate transmit power may be provided for all the UEs at the NodeB #1, 505(1) and the NodeB #2, 505(N). However, a soft handover (HO) area 510 may not be moved in one embodiment. In this way, a desired performance for the affected UEs may be obtained for a dedicated channel (DCH) associated with the SCH.

More specifically, the first RNC 112(1) may measure a signal metric on a wireless channel for the source and target cells 205(1), 205(N) at an affected UE associated with a user (such as at the UE 235 shown in Figure 2) among the UEs#1-12 shown in Figure 5. In response to a difference in the signal metric of the wireless channel across the source and target cells 205(1), 205(N), a handover (HO) event of the user from the source cell 205(1) to the target cell 205(N) may be determined. As a result, the cell border 500 between the source and target cells 205(1), 205(N) may be shifted based on the handover event. This shifting of the cell border 500 may balance traffic load on the one or more shared wireless channels between the source cell 205(1) and the target cell 205(N). In this manner, the first RNC 112(1) may redistribute the traffic load on a single shared wireless channel or more than one shared wireless channels between the source cell 205(1) and the target cell 205(N) based on the first and second indications of loading.

The first RNC 112(1) may trigger a load measurement on the single shared wireless channel of each cell of the source and target cells 205(1), 205(N). Based on the load measurement, the traffic load of the first scheduler 232(1) may be reported to the decision algorithm 215. The decision algorithm 215 may compare the traffic load of the first scheduler 232(1) to a threshold. If the traffic load of the first scheduler 232(1) rises above the threshold and stays above that threshold for a predetermined time, the load measurement may be reported to the decision algorithm 215 that, in turn, decides whether or not to shift the cell border 500 between the source and target cells 205(1), 205(N). However, if the traffic load of the first scheduler 232(1) falls below the threshold and stays below that threshold for a predetermined time, the load measurement may be reported to the decision algorithm 215 that, in turn, decides whether or not to shift the cell border 500 between the source and target cells 205(1), 205(N).

The decision algorithm 215 may detect arrival of a load measurement report for the traffic load for a specific cell of the plurality of cells and determine a change in a handover offset (HO_offset) in response to the load measurement report. Using the first scheduler 232(1), the decision algorithm 215 may cause the first RNC 112(1) to signal the handover offset (HO_offset) to the UE 235. The HO_offset may be applied to the single SCH of the target cell 205(N). After measuring the signal metric on the single SCH of the target cell 205(N), the handover event may be generated.

To shift the cell border 500 between the source and target cells 205(1), 205(N), a point of time and location of the handover event may be moved from the source cell 205(1) towards the target cell 205(N). In this manner, the first RNC 112(1) may balance the traffic load on a downlink transmission in a hard handover. This downlink transmission may occur on a downlink shared channel (DSCH) or a high-speed downlink shared channel (HS-DSCH) of the shared wireless channels.

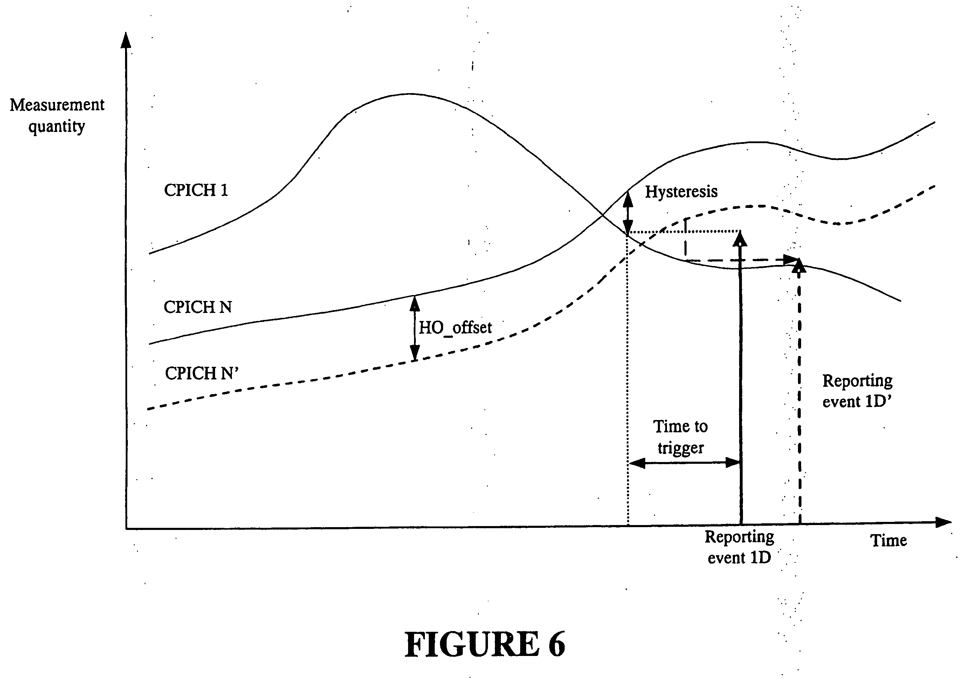

Referring to Figure 6, a stylized representation of the decision algorithm 215 shown in Figure 2 during the measurement event (e.g., a HO measurement reporting event 1D) is described in accordance with one illustrative embodiment of the present invention. In other words, moving the cell border 500 is described by means of the HO measurement reporting event 1D shown in Figure 6. A common pilot channel (CPICH) E_{c}/I₀ measurement may be used for the purpose of deciding whether or not to move the cell border 500 between the source and the target cells 205(1-N). The E_{c}/I₀ measurement may be a dimensionless ratio of the average power of a channel, typically the pilot channel, to the total signal power. The UE 235 may perform this measurement, *e*.*g*., on the Ec/I0 ratio measurement on a CPICH of all cells in an active set, *i.e.* the cells the UE 235 is in a soft handover (HO) with.

An example of a time sequence of the E_{c}/I₀ measurement is shown in Figure 6 for the UE 235 moving from one cell, *i.e*., the source cell 205(1) towards another cell, *i.e.,* the target cell 205(N). The decision algorithm 215 may be used in a switch from a Universal Mobile Telecommunications System Terrestrial Radio Access Network (UTRAN) source cell 205(1) to a UTRAN target cell 205(N). In this manner, the decision algorithm 215 may tune the performance of the UMTS 202 coverage and provide a load balancing for the SCH.

At a certain point in time, the E_{c}/I₀ measurement on the CPICH N becomes larger than on the CPICH 1. According to the CDMA protocol, it may be beneficial to switch the SCH from the source cell 205(1) towards the target cell 205(N) because a better CPICH E_{c}/I₀ measurement indicates a better signal quality from at a cell. A hysteresis and a time-to trigger parameter may be used for the handover towards the target cell 205(N). If the difference between the CPICH 1 and the CPICH N E_{c}/I₀ measurement becomes larger than the hysteresis for a certain amount of time (the so-called time-to-trigger) a measurement event, *i.e*., the HO measurement reporting event 1D may be reported from the UE 235 towards the first RNC 112(1), which then triggers a SCH HO from the source cell 205(1) towards the target cell 205(N). The point in time when to trigger the HO measurement reporting event 1D may depend upon a specific location of the UE 235. This point in time to trigger the HO measurement reporting event 1D may represent the cell border 500 for the associated SCH.

For moving the cell border 500, a specific HO_offset may be applied to the CPICH N. This specific HO_offset may be signaled from the first RNC 112(1) towards the UE 235. The UE 235 may apply this offset when evaluating the HO measurement reporting event 1D yielding to a E_{c}/I₀ measurement of a CPICH N' which is now reduced by the HO_offset. Using the same hysteresis and time-to-trigger, the HO measurement reporting event 1D may now be generated later than the original E_{c}/I₀ measurement of the CPICH N. The point of time and, hence, the location of the HO measurement reporting event 1D has now been shifted from the source cell 205(1) towards the target cell 205(N). Therefore, the cell border 500 for the associated SCH moves towards the target cell 205(N).

As to a load measurement on the SCH, in contrast to the DCH, since the traffic load on a SCH may not directly correlate to the used transmit power on the SCH, the first scheduler 232 (1) for the SCH attempts to fill up all the power that is allocated to that transport channel. For the SCH, the first scheduler 232 (1) may derive the traffic load from a level or grade of service the first scheduler 232 (1) may provide for the individual users on that SCH. For example, a throughput measurement of the individual services carried on the SCH may be used, where a low throughput per service means a high loading and a high throughput per service and a high throughput per service means a low loading on the SCH, respectively. Thus, such a load measurement on the SCH may be used by the decision algorithm 215, in one embodiment to balance the traffic load.

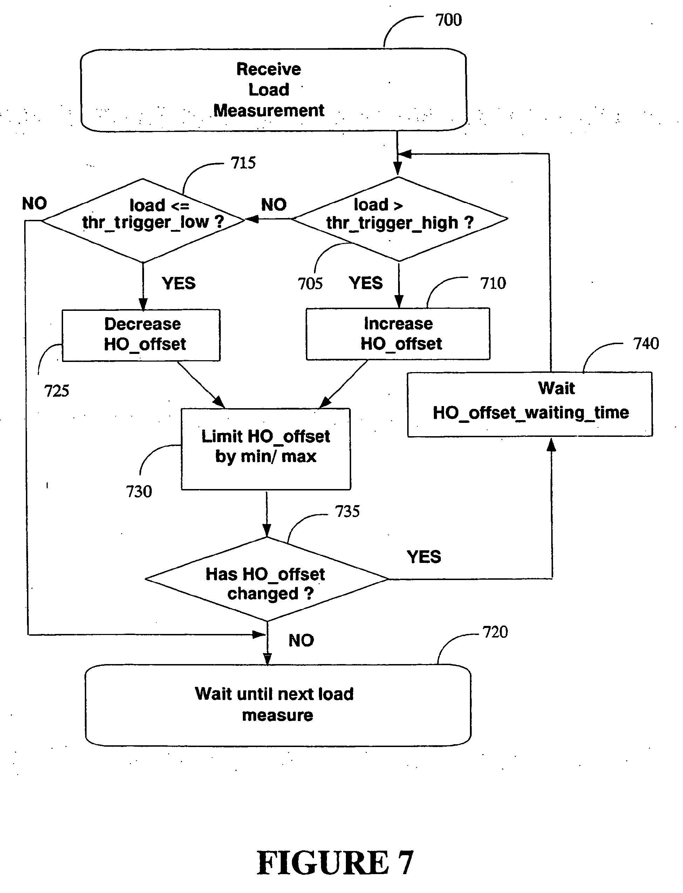

A stylized representation of the decision algorithm 215 is depicted in Figure 7 for the UTRAN 204 according to an embodiment of the present invention. Before the decision algorithm 215 is started, the load measurements on the SCH of each cell may be triggered. These load measurements may report a scheduler load, e.g., of the first scheduler 232 (1) to the decision algorithm 215. Besides simple periodic measurement reporting, event triggered reporting may be deployed to reduce the amount of signaling between a measurement entity, i.e., the first scheduler 232 (1) and a decision entity, i.e., the decision algorithm 215. In one embodiment following two reporting events may be utilized. In a first reporting event, the load measurement may be reported when the first scheduler 232 (1) load rises above an upper threshold (thr_trigger_high) and stays there for the load_measurement_hysteresis_time. Likewise, in a second reporting event, the load measurement may be reported when the first scheduler 232 (1) load falls below a lower threshold (thr_trigger_low) and stays there for the load_measurement_hysteresis_time.

The decision algorithm 215 may be triggered when for a specific cell a new load measurement report is received, as shown at block 700. At decision block 705, the new load measurement report may be checked to ascertain whether the reported load exceeds the upper threshold, i.e., thr_trigger_high. If load > thr_trigger_high, then some of the SCH users may be shifted to other cells, by increasing the HO_offset. As shown at block 710, to force more users to the neighboring cells, the HO_offset may increased by HO_offset = HO_offset + Δ_offset. However, if the reported load <= thr_trigger_high, then the HO_offset may not be increased. At a decision block 715, a check may be made to determine if the reported load is below the lower threshold, i.e., thr_trigger_low. If it is determined that the reported load > thr_trigger_low, then the load is within a certain range where an intended traffic balance exists, indicating that a change to the HO_offset is not desired. The decision algorithm 215 may wait until a next load measurement arrives; as indicated in block 720. Conversely, if load <= thr_trigger_low, then the cell may take over some users of the SCH from other probably overloaded neighboring cells by decreasing the HO_offset.

At block 725, to allow more shared channel users to handover into the cell, the HO_offset may be decreased by HO_offset := HO_offset - Δ_offset. At block 730, the HO_{_}offset may be limited to a minimum and a maximum value to prevent the UEs handing over to another cell, which is out of the soft HO area 510 of that cell, as shown in Figure 5. Limiting of the HO_offset may prevent a decrease to an undesired low level or increase to an undesired very high level. For example, the former situation may occur in case the entire cellular telecommunication system 200 is unloaded. In this case, a user may not enter the cell even if the HO_offset is decreased. In the later situation, when all the cells may become fully loaded, increasing the threshold and initiating handover may lead to an increased load in the neighboring cells, which in turn, may increase their threshold to force some users out of the cell. In one embodiment, to avoid such a behavior, the HO_offset may be set in the following manner: HO_offset = min (max (HO_offset, min_offset), max_offset).

At decision block 735, the decision algorithm 215 may check whether the HO_offset has been changed within the last iteration. When it is determined that the HO_offset has not been changed, then the decision algorithm 215 may proceed to block 720 and wait until a next load measure is received. On the other hand, when the check indicates that the HO_offset has been changed, then a new round of HO_offset modification may be desired When a new round of HO_offset modification is desired, the decision algorithm 215 may wait for a HO_offset_waiting_time to allow the load measurement to occur, as shown in block 740. The decision algorithm 215 may trigger a new load measurement if the load has been changed to a desired direction.

In another embodiment of the present invention, the decision algorithm 215 described above may be modified, when the load measurement allows a periodical reporting of the load measurement once a specific threshold has been crossed, i.e. when either the load is above thr_trigger_high or below thr_trigger_low. With this modification, the blocks 735 and 740 of the decision algorithm 215 may be omitted since triggering may occur when a change in the HO_offset may be desired. In this scenario, a load measurement periodicity may be set to be the HO_offset_waiting_time.

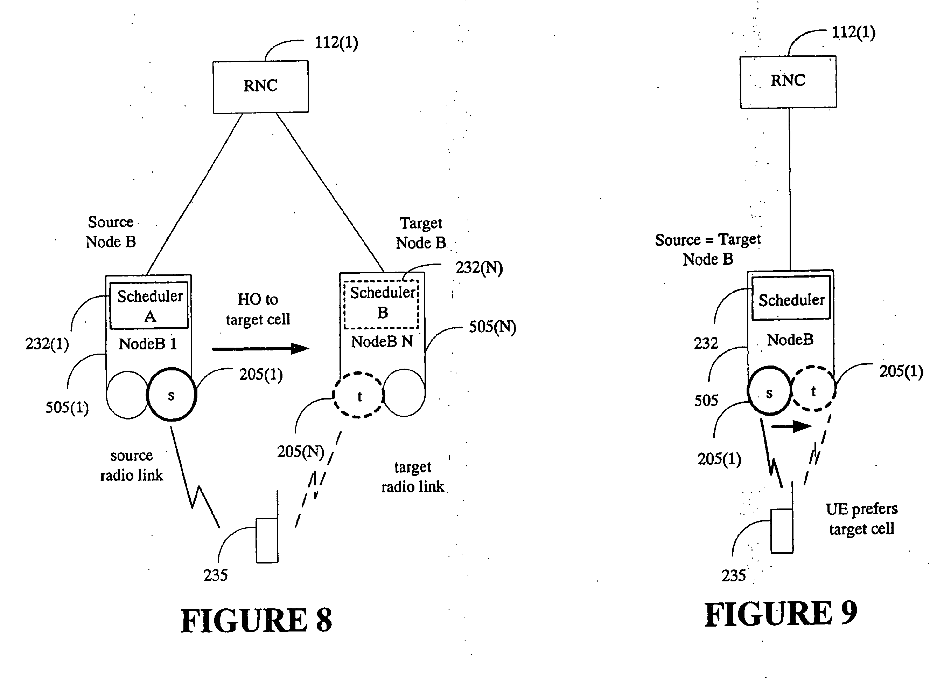

Referring to Figure 8, the decision algorithm 215 shown in Figure 7 may use the HO measurement reporting event 1D shown in Figure 6 for a shared channel (SCH) handover (HO) consistent with an exemplary embodiment of the present invention. In a hard handover scenario for the SCH, as shown in Figure 8, the HO_offset may be applied to the HO measurement event 1D. Using the decision algorithm 215, the traffic load may also be balanced on a conventional DSCH, as well as, on a HS-DSCH. In this exemplary scenario, the DCH of the UE 235 may be connected to two cells located at two separate NodeBs, e.g., the NodeB #1, 505(1) and the NodeB #2, 505(N) shown in Figure 5. The SCH may be served by the first scheduler 232(1) and may be connected via a source radio link to the source cell 205(1), located at the source NodeB #1, 505(1).

Although the first scheduler 232(1) in Figure 8 is disposed in the NodeB #1, 505(1), but it is to be understood that a scheduler or a portion of the scheduler may be located in the cellular telecommunication system 200 depending upon a particular application. For example, in the case of HS-DSCH and the DSCH case such an assignment may be deprived for the schedulers, which may be assigned to a specific cell. In this case, the traffic load in the source cell, s, 205(1) is high enough such that the decision algorithm 215 increases the HO_offset of the source cell, s, 205(1), while the HO_offset of the target cell, t, 205(N) remains unchanged. According to one illustrative embodiment of the instant invention, a SCH handover may be performed as follows:
1. A controlling radio network controller (CRNC), *i.e.,* the first RNC 112(1) signals a new HO_offset to each UE, such as the UE 235 having one DCH radio link connected to the source cell, s, 205(1) via a radio resource control (RRC) measurement control message with the HO measurement reporting event 1D modify and setting the new HO_offset for the source cell, s, 205(1).
2. With the new HO_offset, for a specific UE, a target radio link becomes relatively better than a source radio link. In that case, the HO measurement reporting event 1D is reported to the first RNC 112(1).
3. Upon receiving the HO measurement reporting event 1D from that specific UE, the first RNC 112(1) decides to move a SCH serving radio link from the source cell, s, 205(1) towards the target cell, t, 205(N). The first RNC 112(1) switches the SCH serving radio link from the source cell, s, 205(1) towards the target cell, t, 205(N). For example, this switch may be achieved by means of a synchronized SCH switching procedure as described in the Third Generation Partnership Project (3GPP) UMTS standards. For this purpose, the source NodeB 1, 505(1) and the target NodeB N, 505(N) may be reconfigured by NodeB Application Part (NBAP) radio link modification procedures with the SCH to delete or SCH to add an Information Element (IE) present, respectively. The UE 235 may be reconfigured by a RRC physical channel reconfiguration message with the SCH to modify the IE present. In one embodiment, within this context, the SCH IEs may be used to configure the DSCH or HS-DSCH, respectively.
4. After a successful reconfiguration, the serving SCH radio link may be moved towards the target cell, t, 205(N) and the UE 235 may now be served by the second scheduler 112(N) of the target cell, t, 205(N) in the target NodeB N, 505(N). Because the first scheduler 112(1) of the source cell, s, 205(1) in the source NodeB 1, 505(1) may not serve the SCH of the UE 235, the scheduling load of that scheduler may be significantly reduced.

Due to the usage of layer 3 messaging for a handover there is some latency in the handover procedure in the current 3GPP standards for UMTS release 5. Especially for the HS-DSCH, where a scheduler is located physically in a NodeB, a scheduling entity is ideally reset, when the scheduling entity is being transferred from one NodeB to another NodeB. A radio link control (RLC) may handle some loss of data that has not been transmitted so far from the source NodeB 1, 505(1) to the target NodeB N, 505(N).

To achieve different offsets for the SCH and the associated DCH different measurements may be setup in accordance with one embodiment. For conventional soft HO measurements on the DCH, *i.e*., involving events including events 1A, 1B and 1C, one fixed HO_offset may apply, which may be determined only radio frequency (RF) conditions such as coverage, or operator specific issues, e.g., cell barring. For the SCH handover, *i.e.,* the HO measurement reporting event 1D, a variable HO_offset may be applied, which may be different from the one used for DCH. The decision algorithm 215 may determine this variable HO_offset using, *e.g.,* two different sets of intra-frequency measurements supported by the 3GPP standards.

Referring to Figure 9, the decision algorithm 215 shown in Figure 7 may use a fast cell selection (FCS) on a shared channel (SCH) for a fast handover (HO) according to an embodiment of the present invention. The source cell, s, 205(1) and the target cell, t, 205(N) may be controlled by one scheduler 232 located in a single NodeB 505, e.g., fast cell selection may be supported for the HS-DSCH. In that case, pursuant to the 3GPP standards, the scheduler 232 may autonomously decide, on which cell to schedule. This scheduling decision maybe based on feedback information that is sent back by the UE 235 to the NodeB, 505. By avoiding the use of layer 3 signaling, a relatively faster SCH handover than a conventional handover may be obtained, leading to even an additional scheduling gain for the HS-DSCH case.

In an exemplary scenario, as shown in Figure 9, the UE 235 may be primarily served by the source cell, s, 205(1). Since the traffic load in this serving cell may become larger than the upper threshold, thr_trigger_high, in turn, the decision algorithm 215 may assign a larger HO_offset to the source cell, s, 205(1). Consistent with one embodiment, the fast cell selection for the shared channel handover may occur as follows:
1. A new HO_offset may be signaled to the UE 235. The UE 235 may apply the new HO_offset to an associated FCS entity to decide, from which cell new scheduled data may be requested.
2. In this example, the target cell, t, 205(N) may become a relatively more attractive to the FCS entity, and in turn, the UE 235 may send additional feedbacks to the NodeB 505, requesting data from the target cell, t, 205(N).
3. Because the UE 235 may now be primarily served by the target cell, t, 205(N), the traffic load from that user may be efficiently moved from the source cell, s, 205(1) towards the target cell, t, 205(N).

Therefore, the FCS entity based shared channel handover may use a significantly less signaling than used by a complete handover and may be relatively faster. Furthermore, because a same scheduling entity serves the users in the source cell, s, 205(1) and the target cell, t, 205(N) a scheduler reset may not be desired. Hence, the decision algorithm 215 may avoid data loss during the FCS. Such a signaling may provide the H0_offset for the FCS to the UE 235 on HS-DSCH. For example, a physical (PHY) layer signaling may exchange data between the NodeB 505 and the UE 235. Alternatively, the decision algorithm 215 my apply a RRC signaling from the first RNC 112(1) to the UE 235.

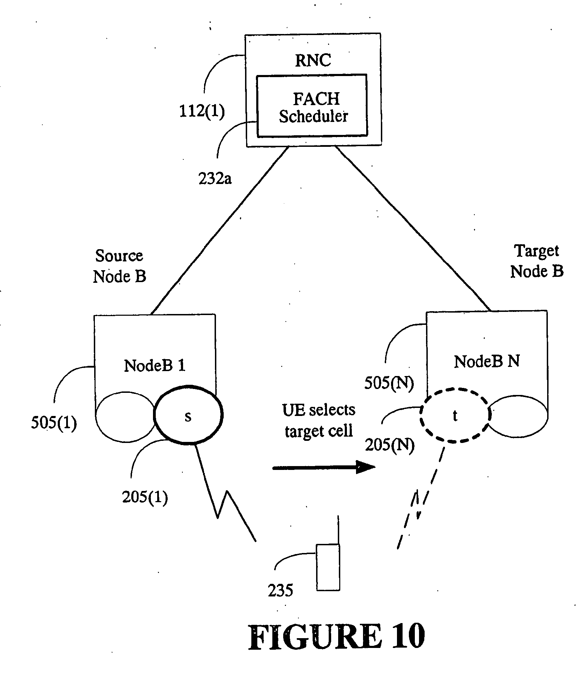

Referring to Figure 10, the decision algorithm 215 shown in Figure 7 may use a cell selection on a forward access channel (FACH) for a handover (HO) in accordance with one illustrative embodiment of the present invention. The FACH is a transport channel with a constant power that may be determined by a desired coverage at the edge of the cells, such as the source cell, s, 205(1) and the target cell, t, 205(N). The FACH may carry short packets, e.g., to support background traffic, which may not be efficiently transmitted over other channels, such as the DCH or the SCH.

A FACH scheduler 232 may control the transmission over the FACH. The FACH scheduler 232 may be located in the first RNC 112(1). To control the traffic load on the FACH between neighboring cells, a similar approach to the HO of the SCH, as shown in Figure 8, may be applied with some modifications. Since the FACH is a channel with a low bandwidth, a scheduling load on the FACH may be measured by a packet delay. That is, a lower delay refers to a low loading, while a higher delay is equivalent to a high loading. The decision algorithm 215, instead of the HO_offset, may use a cell selection offset (CS_offset) for a cell selection and reselection.

In the example shown in Figure 10, before the decision algorithm 215 executes, the UE 235 may be connected to the source cell, s, 205(1). The UE 235 may receive one or more messages on the FACH from the source cell, s, 205(1) and send one or more messages to that cell on the RACH. In contrast to the SCH scenarios described above, there may not be any connections on the DCH from the UE 235 to the source cell, s, 205(1). When the traffic load in the source cell, s, 205(1) is high enough, the decision algorithm 215 may increase the CS_offset of the source cell, s, 205(1), while the CS_offset of the target cell, t, 205(N) may remain unchanged. According to one embodiment of the present invention, the cell selection on the FACH for a handover may occur as follows:
1. A controlling radio network controller (CRNC), *i.e.,* the first RNC 112(1) signals a new CS_offset to each UE, such as the UE 235 connected to the source cell, s, 205(1) via a broadcast on a system information block (SIB) number 4.
2. With the new CS_offset, for a specific UE, a target radio link becomes relatively better than a source radio link. In that case, the UE 235 selects the target cell, t, 205(N) and sends a CELL_update message on the RACH of the source cell, s, 205(1) to the first RNC 112(1) indicating a cell change.
3. Upon receiving the CELL_update from that UE 235, the first RNC 112(1) switches the transmission on the FACH and reception on the RACH for that UE from the source cell, s, 205(1) towards the target cell, t, 205(N). This switch may also imply a transition to the FACH scheduler 232a for the target cell, t, 205(N). The UE 235 may be informed about this transition by sending a CELL_update confirm message on the FACH of the target cell, t, 205(N).
4. After a successful reconfiguration, the FACH scheduler 232a of the target cell, t, 205(N) may serve the UE 235. Since the FACH scheduler 232a of the source cell, s, 205(1) may not serve that UE, the scheduling load of that scheduler may be significantly reduced. In one embodiment, both the source and target FACH schedulers may be located in a same RNC, *i.e.,* the first scheduler 112(1). As a result, essentially a loss-less transfer of the UE 235 may be obtained.

Pursuant to an embodiment of the present invention, the traffic load on the FACH may be controlled as follows. To move a UE, *i.e.,* the UE 235 to the target cell, t, 205(N) an increase in a constant transmit power of the associated FACH may be desired in the target cell, t, 205(N) to ensure the coverage of the target FACH into the area of that UE. Due to the nature of cell selection, an assignment of the RACH to a specific cell may also change. The UE 235 may not be connected to a NodeB with a minimum path-loss, an uplink interference may increase, and, in turn the traffic load in the uplink increases. To limit this effect, different values of a max_offset and a min_offset may be used. However, for the FACH case, these max_offset and min_offset values may be selected tighter than the parameters chosen on the SCH case.

For a conventional call setup phase from an IDLE state to a CELL_DCH state, to keep a signaling delay as short as possible, the UE 235 in the IDLE state may be connected to a NodeB based on an environment condition, *i*.*e*., the NodeB with a lowest path-loss. Therefore, the CS_offset may only be broadcast in the SIB number 4, which is applicable to UEs in a connected state. The offset parameters may be broadcast in the SIB number 3. These offset parameters may be used for the UEs in the IDLE state only and may remain unchanged. In one embodiment, since the CS_offset may be adjusted independently from offsets used on the DCH or the SCH, thus the load balancing for the FACH may be used independently from the loading on the DCH or the SCH.

In this manner, for some embodiments, a significantly improved SCH load balancing may be provided. For instance, the load balancing is performed by applying specific HO_offsets for different cells. Furthermore, these offsets may be different for the SCH and the DCH. By using the HO measurement reporting event 1D, the decision algorithm 215 may apply load balancing to a SCH hard HO. Likewise, use of a specific signaling scheme enables application of the decision algorithm 215 to fast cell selection. Application of the decision algorithm 215 to cell selection may move the traffic load in a CELL_FACH with parameters that may be different from the DCH and call establishment, in other embodiments of the present invention.

The use of the decision algorithm 215 may provide many advantages over a cell engineering method based handling of the traffic load on wireless channels. As one example, the decision algorithm 215 may be applied to a UMTS DSCH, as well as, a UMTS HS-DSCH. Further, usage of the decision algorithm 215 to other standards is also possible, e.g., CDMA-2000 1xRTT is also referred to as 3G1X 1x Evolution (1XEV) data only (EVDO) system. The EVDO system modifies (optimizes) the 1.25 MHz IS-95 radio channel structure to provide high-speed data services (up to 2.4 Mbps) to wireless customers. The EVDO system allows cellular service providers carriers to use one of more IS-95 CDMA radio channels (with changes) to provide broadband high-speed data services to their customers. The CDMA-2000 1xRTT is a 3G wireless technology based on the CDMA platform. The 1x in 1xRTT refers to 1x the number of 1.25MHz channels. The RTT in 1xRTT stands for Radio Transmission Technology.

Advantageously, the traffic load may be balanced between cells in inhomogeneous scenarios to provide users from highly loaded cells resources of a lightly loaded cell that were unused before. The decision algorithm 215 may perform a load control for a specific cell without any knowledge from other cells. In a likelihood where neighboring cells may be changing the HO_offsets simultaneously, a load balancing between the affected cells may be automatically provided. This automatic load balancing may prevent shifting of the UEs from one highly loaded cell to another cell, which becomes highly loaded at the same time. The decision algorithm 215 may reuse the HO measurement reporting event 1D specified by the 3GPP standards without utilizing other signaling, in one particular embodiment.

In contrast to the cell engineering and/or beam-forming based handling of the traffic load on wireless channels, the decision algorithm 215 may balance the traffic load for the SCH independently while the DCH still perform a reception according to a CDMA soft HO protocol. The decision algorithm 215 may nevertheless be combined with the cell engineering and/or beam-forming. To combine these approaches, according to on embodiment, coverage and load may be designed to optimize a reception and a load of the DCH and to adjust the areas where the SCH load balancing may be applied. After that, perform load balancing between the designed cells, beams in the designed areas. With such modifications, the decision algorithm 215 may also be applied for moving the traffic in the CELL_FACH. The CS_offset for cell selection may be selected independently from the HO_offset for the SCH, the offsets for the DCH and the cell selection parameters for a conventional call setup scenario. This independent selection may allow for individual decisions for load balancing based on the traffic load on the FACH. While the invention has been illustrated herein as being useful in a telecommunications network environment, it also has application in other connected environments. For example, two or more of the devices described above may be coupled together via device-to-device connections, such as by hard cabling, radio frequency signals (e.g., 802.11 (a), 802.11 (b), 802.11 (g), Bluetooth, or the like), infrared coupling, telephone lines and modems, or the like. The present invention may have application in any environment where two or more users are interconnected and capable of communicating with one another.

Those skilled in the art will appreciate that the various system layers, routines, or modules illustrated in the various embodiments herein may be executable control units. The control units may include a microprocessor, a microcontroller, a digital signal processor, a processor card (including one or more microprocessors or controllers), or other control or computing devices as well as executable instructions contained within one or more storage devices. The storage devices may include one or more machine-readable storage media for storing data and instructions. The storage media may include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy, removable disks; other magnetic media including tape; and optical media such as compact disks (CDs) or digital video disks (DVDs). Instructions that make up the various software layers, routines, or modules in the various systems may be stored in respective storage devices. The instructions, when executed by a respective control unit, causes the corresponding system to perform programmed acts.

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular embodiments disclosed above may be altered or modified and all such variations are considered within the invention. Accordingly, the protection sought herein is as set forth in the claims below.

## Claims

1. A method of balancing traffic load between a plurality of users on one or more shared wireless channels and one or more dedicated wireless channels associated with a first cell (105a(1)) and a second cell (105a(N)) the method comprising:
determining a first indication of traffic load for said first cell (105a(1)) and a second indication of traffic load for said second cell (105a(N)) on said one or more shared wireless channels; and
redistributing the traffic load on said one or more shared wireless channels from said first cell (105a(1)) to said second cell (1 05a(N) based on said first indication of traffic load for said first cell (105a(1)) and said second indication of traffic load for said second cell (105a(N)), **characterized in that** the redistribution of the traffic load on said one or more shared wireless channels occurring independently of redistribution of a traffic load on said one or more dedicated channels.

2. A method, as set forth in claim 1, further comprising:
directing at least a part of the traffic load on a shared channel of said one or more shared wireless channels from said first cell (105a(1)) to said second cell (105a(N)) based on said first indication of traffic load for said first cell (105a(1)) and said second indication of traffic load for said second cell (105a(N)) to move a border (500) between said first (105a(1)) and second cells;
causing traffic associated with at least one user of said plurality of users on said one or more shared wireless channels to switch from said first cell (105a(1)) to said second cell (105a(N)) based on said first indication of traffic load for said first cell (105a(1)) and said second indication of traffic load for said second cell (105a(N)); and
based on said first indication of traffic load for said first cell (105a(1)) and said second indication of traffic load for said second cell (105a(N)), applying a handover offset to the loadings in said first cell (105a(1)) and said second cell (105a(N)).

3. A method, as set forth in claim 2, further comprising:
measuring a signal metric on a wireless channel for said first (105a(1)) and second cells (105a(N)) at said mobile station (120) associated with said at least one user;
in response to a difference in said signal metric of said wireless channel across said first (105a(1)) and second cells (105a(N)), determining a handover event of said at least one user from said first cell (105a(1)) to said second cell (105a(N)); and
shifting the border (500) between said first (105a(1)) and second cells (105a(N)) based on said handover event;
causing a radio network controller (112(1)) to signal said handover offset to said mobile station (120);
applying said handover offset to said wireless channel of said second cell(105a(N));
generating said handover event after measuring said signal metric on said wireless channel of said second cell (105a(N)); and
moving a point of time and location of said handover event from said first cell (105a(I)) towards said second cell (105a(N)) to shift the border (500) between said first (105a(1)) and second cells (105a(N)).

4. A method, as set forth in claim 1, further comprising:
deriving the traffic load from a level of service a scheduler (232(1)) provides for said plurality of users on a shared channel of said one or more shared wireless channels;
measuring a throughput of one or more individual services carried on said shared channel;
indicating a high loading on said shared channel in response to a low throughput per service of said one or more individual services; and
indicating a low loading on said shared channel in response to a high throughput per service of said one or more individual services.

5. A wireless communication system (100), comprising:
a network (115) including a first cell (105a(1)) and a second cell (105a(N));
a communication node (110a) associated with said network (115) through at least one of said first (105a(1)) and second cells (105a(N)), wherein a mobile station (120) is adapted to communicate over said network(115) with said communication node (110a); and
a controller(112) coupled to said communication node (11 0a) for balancing traffic load in a transmission of data from said communication node (110a) to a multiplicity of users on one or more shared wireless channels, wherein said controller (112) is configured to determine a first indication of traffic load for said first cell (105a(1)) and a second indication of traffic load for said second cell (1 05a(N)) on said one or more shared wireless channels and redistribute the traffic load on said one or more shared wireless channels from said first cell (105a(1)) to said second cell (105a(N)) based on said first indication of traffic load for said first cell (105a(1)) and said second indication of traffic load for said second cell (105a(N)), **characterized in that** the redistribution of the traffic load on said one or more shared wireless channels occurring independently of redistribution of a traffic load on one or more dedicated channels.

6. A wireless communication system (100), as set forth in claim 5, further comprising:
a storage (212) storing instructions that direct at least a part of the traffic load on a shared channel of said one or more shared wireless channels from said first cell (105a(1)) to said second cell (105a(N)) based on said first indication of traffic load for said first cell (105a(1)) and said second indication of traffic load for said second cell (105a(N)) to move a border (500) between said first (105a(1)) and second cells (105a(N)), wherein said controller (112) is at least one of a radio network controller (112(1)) and a base station controller.

7. A wireless communication system (100), as set forth in claim 5, wherein said communication node (110a) further comprising:
a scheduler (232(1)) adapted to provide a level of service for the multiplicity of users on a shared channel of said one or more shared wireless channels to:
derive the traffic load from said level of service;
measure a throughput of one or more individual services carried on said shared channel;
indicate a high loading on said shared channel in response to a low throughput per service of said one or more individual services; and
indicate a low loading on said shared channel in response to a high throughput per service of said one or more individual services.

8. A controller (112) adapted to balance traffic load in a transmission of data from a communication node (110a) to a multiplicity of users on one or more shared wireless channels, the controller (11 0a) comprising:
a processor (210); and
a memory (212) coupled to said processor (210), said memory (212) storing instructions to determine a first indication of traffic load for a first cell (105a(1)) and a second indication of traffic load for a second cell(105a(N)) on said one or more shared wireless channels and redistributing the traffic load on said one or more shared wireless channels from said first cell (105a(1)) to said second cell (105a(N)) based on said first indication of traffic load for said first cell (105a(1)) and said second indication of traffic load for said second cell (105a(N)) **characterized in that** the redistribution of the traffic load on said one or more shared wireless channels occurring independently of redistribution of a traffic load on one or more dedicated channels.

9. A controller (212), as set forth in claim 8, wherein said controller (212) is at least one of a radio network controller (112(1)) and a base station controller and said network (115) is a cellular network including a plurality of cells (205) and a base station (220(1)) and wherein said instructions define a decision algorithm (215) that directs at least a part of the traffic load on a shared channel of said one or more shared wireless channels from said first cell (105a(1)) to said second cell (105a(N)) based on said first indication of traffic load for said first cell (105a(1)) and said second indication of traffic load for said second cell (105a(N)) to move a border between said first (105a(1)) and second cells (105a(N)).

10. An article comprising a computer readable storage medium storing instructions that, when executed cause a wireless communication system (100) to:
determine a first indication of traffic load for a first cell (105a(1)) and a second indication of traffic load for a second cell (105a(N)) for balancing the traffic load between a plurality of users on one or more shared wireless channels associated with said first (105a(1)) and second cells (105a(N)); and
redistributing the traffic load on said one or more shared wireless channels from said first cell (105a(1)) to said second cell (105a(N)) based on said first indication of traffic load for said first cell (105a(1)) and said second indication of traffic load for said second cell (105a(N)) **characterized in that** the redistribution of the traffic load on said one or more shared wireless channels occurring independently of redistribution of a traffic load on one or more dedicated channels.

## Patentansprüche

1. Verfahren zum Ausgleichen der Verkehrsbelastung zwischen einer Mehrzahl von Benutzern auf einem oder mehreren gemeinsam genutzten drahtlosen Kanälen und einem oder mehreren, einer ersten Zelle (105a(1)) und einer zweiten Zelle (105a(N)) zugeordneten festgeschalteten drahtlosen Kanälen, mit folgenden Schritten:
Bestimmen einer ersten Anzeige von Verkehrsbelastung für die erste Zelle (105a(1)) und einer zweiten Anzeige von Verkehrsbelastung für die zweite Zelle (105a(N)) auf dem einen oder den mehreren gemeinsam genutzten drahtlosen Kanälen; und
Umverteilen der Verkehrsbelastung auf dem einen oder den mehreren gemeinsam genutzten Kanälen von der ersten Zelle (105a(1)) zu der zweiten Zelle (105a(N)) auf Grundlage der ersten Anzeige von
Verkehrsbelastung für die erste Zelle (105a(1)) und der zweiten Anzeige von Verkehrsbelastung für die zweite Zelle (105a(N)), **dadurch gekennzeichnet, daß** die Umverteilung der Verkehrsbelastung auf dem einen oder den mehreren gemeinsam genutzten drahtlosen Kanälen unabhängig von der Umverteilung einer Verkehrsbelastung auf dem einen oder den mehreren festgeschalteten Kanälen stattfindet.

2. Verfahren nach Anspruch 1, weiterhin mit folgenden Schritten:
Leiten mindestens eines Teils der Verkehrsbelastung auf einen gemeinsam genutzten Kanal des einen oder der mehreren gemeinsam genutzten drahtlosen Kanäle von der ersten Zelle (105a(1)) zu der zweiten Zelle (105a(N)) auf Grundlage der ersten Anzeige von Verkehrsbelastung für die erste Zelle (105a(1)) und der zweiten Anzeige von Verkehrsbelastung für die zweite Zelle (105a(N)) zum Verlegen einer Grenze (500) zwischen der ersten (105a(1)) und der zweiten Zelle;
Veranlassen, daß mindestens einem Benutzer der Mehrzahl von Benutzern auf dem einen oder den mehreren gemeinsam genutzten drahtlosen Kanälen' zugeordneter Verkehr auf Grundlage der ersten Anzeige von Verkehrsbelastung für die erste Zelle (105a(1)) und der zweiten Anzeige von Verkehrsbelastung für die zweite Zelle (105a(N)) von der ersten Zelle (105a(1)) zu der zweiten Zelle (105a(N)) umwechselt; und
auf Grundlage der ersten Anzeige von Verkehrsbelastung für die erste Zelle (105a(1)) und der zweiten Anzeige von Verkehrsbelastung für die zweite Zelle (105a(N)), Anwenden eines Bereichswechsel-Offsets auf die Belastungen in der ersten Zelle (105a(1)) und der zweiten Zelle (105a(N)).

3. Verfahren nach Anspruch 2, weiterhin mit folgenden Schritten:
Messen einer Signalmetrik auf einem drahtlosen Kanal für die erste (105a(1)) und zweite Zelle (105a(N)) an der mindestens einem Benutzer zugeordneten Mobilstation (120);
als Reaktion auf einen Unterschied in der Signalmetrik des ersten drahtlosen Kanals über die erste (105a(1)) und zweite Zelle (105a(N)), Bestimmen eines Bereichswechselereignisses des mindestens einen Benutzers von der ersten Zelle (105a(1)) zu der zweiten Zelle (105a(N)); und
Verschieben der Grenze (500) zwischen der ersten (105a(1)) und zweiten Zelle (105a(N)) auf Grundlage des Bereichswechselereignisses;
Veranlassen, daß eine Funknetzsteuerung (112(1)) den Bereichswechsel-Offset der Mobilstation (120) signalisiert;
Anwenden des Bereichswechsel-Offsets auf den drahtlosen Kanal der zweiten Zelle (105a(N));
Erzeugen des Bereichswechselereignisses nach Messen der Signalmetrik auf dem drahtlosen Kanal der zweiten Zelle (105a(N)); und
Verlegen eines Zeitpunkts und Standorts des Bereichswechselereignisses von der ersten Zelle (105a(1)) zur Richtung der zweiten Zelle (105a(N)) zum Verschieben der Grenze (500) zwischen der ersten Zelle (105a(1)) und zweiten Zelle (105a(N)).

4. Verfahren nach Anspruch 1, weiterhin mit folgenden Schritten:
Ableiten der Verkehrsbelastung aus einer Verbindungsgüte, die von einer Ablaufsteuerung (232(1)) für die Mehrzahl von Benutzern auf einem gemeinsam genutzten Kanal des einen oder der mehreren gemeinsam genutzten drahtlosen Kanäle bereitgestellt werden;
Messen eines Durchsatzes von einem oder mehreren, auf dem gemeinsam genutzten Kanal geführten einzelnen Diensten;
Anzeigen einer hohen Belastung auf dem gemeinsam genutzten Kanal als Reaktion auf einen geringen Durchsatz pro Dienst des einen oder der mehreren einzelnen Dienste; und
Anzeigen einer niedrigen Belastung auf dem gemeinsam genutzten Kanal als Reaktion auf einen hohen Durchsatz pro Dienst des einen oder der mehreren einzelnen Dienste.

5. Drahtloses Kommunikationssystem (100) mit folgendem:
einem Netz (115) mit einer ersten Zelle (105a(1)) und einer zweiten Zelle (105a(N));
einem, dem Netz (115) über mindestens eine der ersten (105a(1)) und zweiten Zelle (105a(N)) zugeordneten Kommunikationsknoten (110a), wobei eine Mobilstation (120) zum Kommunizieren mit dem Kommunikationsknoten (110a) über das Netz (115) angeordnet ist; und
einer an den Kommunikationsknoten (110a) angekoppelten Steuerung (112) zum Ausgleichen der Verkehrsbelastung in einer Übertragung von Daten von dem Kommunikationsknoten (110a) zu einer Vielzahl von Benutzern auf einem oder mehreren gemeinsam genutzten drahtlosen Kanälen, wobei die Steuerung (112) zum Bestimmen einer ersten Anzeige von Verkehrsbelastung für die erste Zelle (105a(1)) und einer zweiten Anzeige von Verkehrsbelastung für die zweite Zelle (105a(N)) auf dem einen oder den mehreren gemeinsam genutzten drahtlosen Kanälen und zum Umverteilen der Verkehrsbelastung auf dem einen oder den mehreren drahtlosen Kanälen von der ersten Zelle (105a(1)) zu der zweiten Zelle (105a(N)) auf Grundlage der ersten Anzeige von Verkehrbelastung für die erste Zelle (105a(1)) und der zweiten Anzeige von Verkehrbelastung für die zweite Zelle (105a(N)) konfiguriert ist, **dadurch gekennzeichnet, daß** die Umverteilung der Verkehrsbelastung auf dem einen oder den mehreren gemeinsam genutzten drahtlosen Kanälen unabhängig von der Umverteilung einer Verkehrsbelastung auf einem oder mehreren festgeschalteten Kanälen stattfindet.

6. Drahtloses Kommunikationssystem (100) nach Anspruch 5, weiterhin mit folgendem:
einem Speicher (212), der Anweisungen speichert, die mindestens einen Teil der Verkehrsbelastung auf einem gemeinsam genutzten Kanal des einen oder der mehreren gemeinsam genutzten Kanäle von der ersten Zelle (105a(1)) zu der zweiten Zelle (105a(N)) auf Grundlage der ersten Anzeige von Verkehrsbelastung für die erste Zelle (105a(1)) und der zweiten Anzeige von Verkehrsbelastung für die zweite Zelle (105a(N)) leiten zum Verlegen einer Grenze (500) zwischen der ersten (105a(1)) und der zweiten Zelle (105a(N)), wobei die Steuerung (112) mindestens eine einer Funknetzsteuerung (112(1)) und einer Basisstationssteuerung ist.

7. Drahtloses Kommunikationssystem (100) nach Anspruch 5, wobei der Kommunikationsknoten (110a) weiterhin folgendes umfaßt:
eine Ablaufsteuerung (232(1)) zur Bereitstellung einer Verbindungsgüte für die Vielzahl von Benutzern auf einem gemeinsam genutzten Kanal des einen oder der mehreren gemeinsam genutzten drahtlosen Kanäle, zum:
Ableiten der Verkehrsbelastung aus der Verbindungsgüte;
Messen eines Durchsatzes von einem oder mehreren auf dem gemeinsam genutzten Kanal geführten einzelnen Diensten;
Anzeigen einer hohen Belastung auf dem gemeinsam genutzten Kanal als Reaktion auf einen niedrigen Durchsatz pro Dienst des einen oder der mehreren einzelnen Dienste; und
Anzeigen einer niedrigen Belastung auf dem gemeinsam genutzten Kanal als Reaktion auf einen hohen Durchsatz pro Dienst des einen oder der mehreren einzelnen Dienste.

8. Steuerung (112) zum Ausgleichen von Verkehrsbelastung in einer Übertragung von Daten von einem Kommunikationsknoten (110a) zu einer Vielzahl von Benutzern auf einem oder mehreren gemeinsam genutzten drahtlosen Kanälen, wobei die Steuerung (110a) folgendes umfaßt:
einen Prozessor (210); und
einen an den Prozessor (210) angekoppelten Speicher (212), wobei der Speicher (212) Anweisungen zum Bestimmen einer ersten Anzeige von für eine erste Zelle (105a(1)) und einer zweiten Anzeige von Verkehrsbelastung für eine zweite Zelle (105a(N)) auf dem einen oder den mehreren gemeinsam genutzten drahtlosen Kanälen und Umverteilen der Verkehrsbelastung auf dem einen oder den mehreren gemeinsam genutzten drahtlosen Kanälen von der ersten Zelle (105a(1)) zu der zweiten Zelle (105a(N)) auf Grundlage der ersten Anzeige von Verkehrsbelastung für die erste Zelle (105a(1)) und der zweiten Anzeige von Verkehrsbelastung für die zweite Zelle (105a(N)) speichert, **dadurch gekennzeichnet, daß** die Umverteilung der Verkehrsbelastung auf dem einen oder den mehreren gemeinsam genutzten drahtlosen Kanälen unabhängig von der Umverteilung einer Verkehrsbelastung auf einem oder mehreren festgeschalteten Kanälen stattfindet.

9. Steuerung (212) nach Anspruch 8, wobei die Steuerung (212) mindestens eine einer Funknetzsteuerung (112(1)) und einer Basisstationssteuerung ist und das Netz (115) ein Zellularnetz mit einer Mehrzahl von Zellen (205) und einer Basisstation (220(1)) ist und wobei die Anweisungen einen Entscheidungsalgorithmus (215) definieren, der mindestens einen Teil der Verkehrsbelastung auf einem gemeinsam genutzten Kanal des einen oder der mehreren gemeinsam genutzten drahtlosen Kanäle von der ersten Zelle (105a(1)) zu der zweiten Zelle (105a(N)) auf Grundlage der ersten Anzeige von Verkehrsbelastung für die erste Zelle (105a(1)) und der zweiten Anzeige von Verkehrsbelastung für die zweite Zelle (105a(N)) leitet, zum Verlegen einer Grenze zwischen der ersten (105a(1)) und zweiten Zelle (105a(N)).

10. Gegenstand mit einem maschinenlesbaren Speichermedium, das Anweisungen speichert, die bei ihrer Ausführung ein drahtloses Kommunikationssystem (100) veranlassen zum:
Bestimmen einer ersten Anzeige von Verkehrsbelastung für eine erste Zelle (105a(1)) und einer zweiten Anzeige von Verkehrsbelastung für eine zweite Zelle (105a(N)) zum Ausgleichen der Verkehrsbelastung zwischen einer Mehrzahl von Benutzern auf einem oder mehreren, der ersten (105a(1)) und zweiten Zelle (105a(N)) zugeordneten gemeinsam genutzten drahtlosen Kanälen; und
Umverteilen der Verkehrsbelastung auf dem einen oder den mehreren gemeinsam genutzten drahtlosen Kanälen von der ersten Zelle (105a(1)) zu der zweiten Zelle (105a(N)) auf Grundlage der ersten Anzeige von Verkehrsbelastung für die erste Zelle (105a(1)) und der zweiten Anzeige von Verkehrsbelastung für die zweite Zelle (105a(N)), **dadurch gekennzeichnet, daß** die Umverteilung der Verkehrsbelastung auf dem einen oder den mehreren gemeinsam genutzten drahtlosen Kanälen unabhängig von der Umverteilung einer Verkehrsbelastung auf einem oder mehreren festgeschalteten Kanälen stattfindet.

## Revendications

1. Procédé d'équilibrage d'une charge de trafic entre une pluralité d'utilisateurs sur un ou plusieurs canaux sans fil partagés et un ou plusieurs canaux sans fil dédiés associés à une première cellule (105a(1)) et une deuxième cellule (105a(N)), le procédé comprenant :
la détermination d'une première indication de la charge de trafic de ladite première cellule (105a(1)) et d'une deuxième indication de la charge de trafic de ladite deuxième cellule (105a(N)) sur lesdits un ou plusieurs canaux sans fil; et
la redistribution de la charge de trafic sur lesdits un ou plusieurs canaux sans fil partagés de ladite première cellule (105a(1)) à ladite deuxième cellule (105a(N)) d'après ladite première indication de la charge de trafic de ladite première cellule (105a(1)) et ladite deuxième indication de la charge de trafic de ladite deuxième cellule (105a(N)), **caractérisé en ce que** la redistribution de la charge de trafic sur lesdits un ou plusieurs canaux sans fil partagés se produit indépendamment de la redistribution d'une charge de trafic sur lesdits un ou plusieurs canaux dédiés.

2. Procédé selon la revendication 1, comprenant en outre :
l'orientation d'au moins une partie de la charge de trafic sur un canal partagé desdits un ou plusieurs canaux sans fil partagés depuis ladite première cellule (105a(1)) vers ladite deuxième cellule (105a(N)) d'après ladite première indication de la charge de trafic de ladite première cellule (105a(1)) et ladite deuxième indication de la charge de trafic de ladite deuxième cellule (105a(N)), afin de déplacer une frontière (500) entre lesdites première (105a(1)) et deuxième cellules ;
la commutation du trafic associé à au moins un utilisateur de ladite pluralité d'utilisateurs sur au moins un ou plusieurs canaux sans fil partagés de ladite première cellule (105a(1)) à ladite deuxième cellule (105a(N)) d'après ladite première indication de la charge de trafic de ladite première cellule (105a(1)) et ladite deuxième indication de la charge de trafic de ladite deuxième cellule (105a(N)) ; et
d'après ladite première indication de la charge de trafic de ladite première cellule (105a(1)) et ladite deuxième indication de la charge de trafic de ladite deuxième cellule (105a(N)), l'application d'un décalage de transfert aux chargements dans ladite première cellule (105a(1)) et ladite deuxième cellule (105a(N)).

3. Procédé selon la revendication 2, comprenant en outre :
la mesure d'une métrique de signal sur un canal sans fil pour lesdites première (105a(1)) et deuxième (105a(N)) cellules au niveau de ladite station mobile (120) associée audit au moins un utilisateur ;
en réponse à une différence de ladite métrique de signal dudit canal sans fil à travers lesdites première (105a(1)) et deuxième (105a(N)) cellules, la détermination d'un événement de transfert dudit au moins un utilisateur de ladite première cellule (105a(1)) à ladite deuxième cellule (105a(N)) ; et
le déplacement de la frontière (500) entre ladite première (105a(1)) et ladite deuxième (105a(N)) cellules d'après ledit événement de transfert ;
l'incitation d'un contrôleur de réseau radio (112(1)) à signaler ledit décalage de transfert à ladite station mobile (120) ;
l'application dudit décalage de transfert audit canal sans fil de ladite deuxième cellule (105a(N)) ;
la génération dudit événement de transfert après la mesure de ladite métrique de signal sur ledit canal sans fil de ladite deuxième cellule (105a(N)) ; et
le déplacement d'un point de temps et d'un emplacement dudit événement de transfert de ladite première cellule (105a(1)) vers ladite deuxième cellule (105a(N)) afin de déplacer la frontière (500) entre lesdites première (105a(1)) et deuxième (105a(N)) cellules.

4. Procédé, selon la revendication 1, comprenant en outre :
la dérivée de la charge de trafic à partir d'un niveau de service qu'un ordonnanceur (232(1)) fournit à ladite pluralité d'utilisateurs sur un canal partagé desdits un ou plusieurs canaux sans fil partagés ;
la mesure d'un rendement d'un ou de plusieurs services individuels exécutés sur ledit canal partagé
l'indication d'un chargement élevé sur ledit canal partagé en réponse à un faible rendement par service desdits un ou plusieurs services individuels ; et
l'indication d'un chargement faible sur ledit canal partagé en réponse à un rendement élevé par service desdits un ou plusieurs services individuels.

5. Système de communication sans fil (100), comprenant:
un réseau (115) comportant une première cellule (105a(1)) et une deuxième cellule (105a(N)) ;
un noeud de communication (110a) associé audit réseau (115) par le biais d'au moins une desdites première (105a(1)) et deuxième (105a(N)) cellules, dans lequel une station mobile (120) est adaptée pour communiquer sur ledit réseau (115) avec ledit noeud de communication (110a) ; et
un contrôleur (112) couplé audit noeud de communication (110a) pour équilibrer la charge de trafic dans une transmission de données depuis ledit noeud de communication (110a) vers une multiplicité d'utilisateurs sur un ou plusieurs canaux sans fil partagés, dans lequel ledit contrôleur (112) est configuré pour déterminer une première indication de la charge de trafic de ladite première cellule (105a(1)) et une deuxième indication de la charge de trafic de ladite deuxième cellule (105a(N)) sur lesdits un ou plusieurs canaux sans fil et redistribuer la charge de trafic sur lesdits un ou plusieurs canaux sans fil partagés de ladite première cellule (105a(1)) à ladite deuxième cellule (105a(N)) d'après ladite première indication de la charge de trafic de ladite première cellule (105a(1)) et ladite deuxième indication de la charge de trafic de ladite deuxième cellule (105a(N)), **caractérisé en ce que** la redistribution de la charge de trafic sur lesdits un ou plusieurs canaux sans fil partagés se produit indépendamment de la redistribution d'une charge de trafic sur lesdits un ou plusieurs canaux dédiés.

6. Système de communication sans fil (100) selon la revendication 5, comprenant en outre :
une mémoire (212) qui mémorise des instructions qui orientent au moins une partie de la charge de trafic sur un canal partagé desdits un ou plusieurs canaux sans fil partagés depuis ladite première cellule (105a(1)) vers ladite deuxième cellule (105a(N)) d'après ladite première indication de la charge de trafic de ladite première cellule (105a(1)) et ladite deuxième indication de la charge de trafic de ladite deuxième cellule (105a(N)), afin de déplacer une frontière (500) entre lesdites première (105a(1)) et deuxième (105a(N)) cellules, dans lequel ledit contrôleur 112 est au moins l'un d'un contrôleur de réseau radio (112(1)) et d'un contrôleur de stations de base.

7. Système de communication sans fil (100) selon la revendication 5, dans lequel ledit noeud de communication (110a) comprend en outre :
un ordonnanceur (232(1)) adapté pour fournir un niveau de service à la multiplicité d'utilisateurs sur un canal partagé desdits un ou plusieurs canaux sans fil partagés afin de :
dériver la charge de trafic à partir dudit niveau de service ;
mesurer un rendement d'un ou de plusieurs services individuels exécutés sur ledit canal partagé ;
indiquer un chargement élevé sur ledit canal partagé en réponse à un faible rendement par service desdits un ou plusieurs services individuels; et
indiquer un chargement faible sur ledit canal partagé en réponse à un rendement élevé par service desdits un ou plusieurs services individuels.

8. Contrôleur (112) adapté pour équilibrer la charge de trafic dans une transmission de données depuis un noeud de communication (110a) vers une multiplicité d'utilisateurs sur un ou plusieurs canaux sans fil partagés, le contrôleur (110a) comprenant :
un processeur (210) ; et
une mémoire (212) couplée audit processeur (210), ladite mémoire (212) mémorisant des instructions pour déterminer une première indication de la charge de trafic d'une première cellule (105a(1)) et une deuxième indication de la charge de trafic d'une deuxième cellule (105a(N)) sur lesdits un ou plusieurs canaux sans fil partagés et redistribuer la charge de trafic sur lesdits un ou plusieurs canaux sans fil partagés de ladite première cellule (105a(1)) à ladite deuxième cellule (105a(N)) d'après ladite première indication de la charge de trafic de ladite première cellule (105a(1)) et ladite deuxième indication de la charge de trafic de ladite deuxième cellule (105a(N)), **caractérisé en ce que** la redistribution de la charge de trafic sur lesdits un ou plusieurs canaux sans fil partagés se produit indépendamment de la redistribution d'une charge de trafic sur lesdits un ou plusieurs canaux dédiés.

9. Contrôleur (212) selon la revendication 8, dans lequel ledit contrôleur (212) est au moins l'un d'un contrôleur de réseau radio (112(1)) et d'un contrôleur de stations de base et ledit réseau (115) est un réseau cellulaire comportant une pluralité de cellules (205) et une station de base (220(1)) et dans lequel lesdites instructions définissent un algorithme de décision (215) qui oriente au moins une partie de la charge de trafic sur un canal partagé desdits un ou plusieurs canaux sans fil partagés depuis ladite première cellule (105a(1)) vers ladite deuxième cellule (105a(N)) d'après ladite première indication de la charge de trafic de ladite première cellule (105a(1)) et ladite deuxième indication de la charge de trafic de ladite deuxième cellule (105a(N)), afin de déplacer une frontière (500) entre lesdites première (105a(1)) et deuxième (105a(N)) cellules.

10. Article comprenant un support de mémorisation lisible par ordinateur mémorisant des instructions qui, lorsqu'elles sont exécutées amènent un système de communication sans fil (100) à :
déterminer une première indication de la charge de trafic d'une première cellule (105a(1)) et une deuxième indication de la charge de trafic d'une deuxième cellule (105a(N)) pour équilibrer la charge de trafic entre une pluralité d'utilisateurs sur un ou plusieurs canaux sans fil partagés associés auxdites première (105a(1)) et deuxième (105a(N)) cellules ; et
redistribuer la charge de trafic sur les un ou plusieurs canaux sans fil partagés de ladite première (105a(1)) à ladite deuxième (105a(N)) cellule d'après ladite première indication de la charge de trafic de ladite première cellule (105a(1)) et ladite deuxième indication de la charge de trafic de ladite deuxième cellule (105a(N)), **caractérisé en ce que** la redistribution de la charge de trafic sur lesdits un ou plusieurs canaux sans fil partagés se produit indépendamment de la redistribution d'une charge de trafic sur lesdits un ou plusieurs canaux dédiés.
